(19) Europäisches Patentamt / European Patent Office / Office européen des brevets

(11) EP 2 463 759 A1

(12) EUROPEAN PATENT APPLICATION
published in accordance with Art. 153(4) EPC

(43) Date of publication:
13.06.2012 Bulletin 2012/24

(51) Int Cl.:
G06F 3/041 (2006.01)          G06F 3/044 (2006.01)
G06F 3/045 (2006.01)

(21) Application number: 10817020.0

(22) Date of filing: 24.08.2010

(86) International application number:
PCT/JP2010/064295

(87) International publication number:
WO 2011/033907 (24.03.2011 Gazette 2011/12)

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR

(30) Priority: 15.09.2009 JP 2009213098

(71) Applicant: Sharp Kabushiki Kaisha
Osaka-shi, Osaka 545-8522 (JP)

(72) Inventor: MISAKI Katsunori
Yonago-shi, Tottori 689-3524 (JP)

(74) Representative: Müller-Boré & Partner
Patentanwälte
Grafinger Straße 2
81671 München (DE)

(54) TOUCH PANEL AND DISPLAY DEVICE PROVIDED WITH SAME

(57) Provided is a touch panel wherein, by a simple configuration, touch electrodes formed on a transparent insulating substrate can be prevented from being visible. A touch panel (100) includes a transparent substrate (1) having an insulating property; a touch electrode (2) formed of a transparent conductive film formed in a pattern on the substrate (1); and a floating electrode (3) formed of a transparent conductive film, the floating electrode (3) being formed in an area on the substrate (1) where the touch electrode (2) is not formed. The touch electrode (2) and the floating electrode (3) respectively have slits (8, 9) so that a plurality of microareas (2a, 3a) are formed in the same.

FIG. 1

EP 2 463 759 A1

## Description

Technical Field

The present invention relates to a touch panel having touch electrodes formed with transparent conductive films on a transparent insulating substrate, and to a display device provided with this touch panel.

Background Art

Recently, with the spread of personal digital assistants (PDA), palm top computers, portable game equipment, etc., a touch panel formed on a transparent substrate has been known widely as an input means that can be combined with a display device.

For example, in a liquid crystal display device as a touch-panel-equipped display device, a transparent touch panel is laminated on an image display surface of liquid crystal panel. Thus, with the liquid crystal display device, an image displayed on the liquid crystal panel can be viewed through the touch panel. When an external surface of the touch panel, that is, a surface of the touch panel on which display images on the liquid crystal panel are observed is pressed with a fingertip or an input pen, the pressed position can be detected. This allows input contents to the touch panel to be reflected on the control of used equipment such as a PDA.

Touch panels in which transparent substrates are used are classified into the electrostatic capacitance type and the resistance film type, depending on the position detecting method. A resistance film touch panel has a two-part structure composed of a film and a glass plate, and when an outer surface of the touch panel is pressed, the film is pressed down and short-circuited, whereby a touched position is detected. Therefore, the resistance film touch panel has drawbacks such as a narrow operation temperature range, and fragility in aging.

In contrast, in an electrostatic capacitance touch panel, touch electrodes formed of transparent conductive films are formed in a two-dimensional pattern on a transparent insulating substrate such as a glass plate or a film. This electrostatic capacitance touch panel has a configuration of detecting a touched position based on a change in an electrostatic capacitance that is formed by the touch electrodes. Since the electrostatic capacitance touch panel can be obtained by forming transparent conductive films of ITO (indium tin oxide), etc., on one substrate, it has characteristics of easy fabrication and high durability. Therefore, recently, it is used for various purposes. Particularly, a projection-type electrostatic capacitance touch panel having touch electrodes arranged at predetermined intervals in a predetermined two-dimensional pattern is capable of detecting a plurality of touched points at the same time, that is, applicable to so-called multitouching. Therefore, it particularly has attracted attention in recent years.

Touch electrodes of a touch panel are required to have a low resistance, so as to enhance the accuracy in detecting a touched position. In order to decrease a resistance in transparent conductive films such as ITO films, it is necessary that the transparent conductive films have a thickness of a certain set value or more. However, as the thickness of the transparent conductive films increases, the refractive index of light varies more greatly at a boundary between a part where the transparent conductive films are formed and a part where they are not formed. Then, the touch electrodes provided in a pattern tend to be visible to a user, and this deteriorates an image quality of a displayed image viewed through the touch panel.

To solve this problem that the image quality of the displayed image is deteriorated by the pattern of touch electrodes, for example, it has been proposed to apply an undercoat of at least one layer or more layers to a film substrate on which the touch electrodes are formed (see JP2009-76432A).

Disclosure of Invention

In the case of the touch panel in which the conventional film material is used, however, one or more layers of undercoat are applied to the transparent substrate, which needs more steps in the manufacturing process, leading to an increase in the costs.

Further, in the case where the above-described undercoat layers are formed on a display device, the transmissivity of the touch panel decreases, which makes a display image difficult to see.

It is an object of the present invention to provide a touch panel wherein, by a simple configuration, touch electrodes formed on a transparent insulating substrate can be prevented from being visible.

A touch panel according to one embodiment of the present invention includes: a transparent substrate having an insulating property; a touch electrode formed of a transparent conductive film formed in a pattern on the substrate; and a floating electrode formed of a transparent conductive film, the floating electrode being formed in an area on the substrate where the touch electrode is not formed, wherein the touch electrode and the floating electrode respectively have slits so that a plurality of microareas are formed in each of the same.

With the configuration of the above-described embodiment, it is possible to effectively prevent a pattern of touch electrodes from being visible to a user.

Brief Description of Drawings

[FIG. 1] FIG. 1 is a plan view showing an electrode pattern of a touch panel according to one embodiment of the present invention.
[FIG. 2] FIG. 2 is a partially enlarged plan view showing microareas formed in touch electrodes and floating electrodes in a touch panel according to one embodiment of the present invention.

[FIG. 3] FIG. 3 is a partially enlarged plan view showing a structure of microareas formed in touch electrodes and floating electrodes in a touch panel according to one embodiment of the present invention.

[FIG. 4] FIG. 4 is a partially enlarged plan view showing another form of microareas formed in touch electrodes and floating electrodes in a touch panel according to one embodiment of the present invention.

[FIG. 5] FIG. 5 is a partially enlarged plan view showing still another form of microareas formed in touch electrodes and floating electrodes in a touch panel according to one embodiment of the present invention.

[FIG. 6] FIG. 6 is a cross-sectional view showing respective configurations of touch electrodes, a lead line, and a terminal in a touch-panel-equipped liquid crystal display device according to one embodiment of the present invention.

[FIG. 7] FIG. 7 is a cross-sectional view showing the first step in a method for manufacturing a touch-panel-equipped liquid crystal display device according to one embodiment of the present invention.

[FIG. 8] FIG. 8 is a cross-sectional view showing the next step in the method for manufacturing the touch-panel-equipped liquid crystal display device according to one embodiment of the present invention.

[FIG. 9] FIG. 9 is a cross-sectional view showing the last step in the method for manufacturing the touch-panel-equipped liquid crystal display device according to one embodiment of the present invention.

Description of the Invention

A touch panel according to one embodiment of the present invention includes i a transparent substrate having an insulating property; a touch electrode formed of a transparent conductive film formed in a pattern on the substrate; and a floating electrode formed of a transparent conductive film, the floating electrode being formed in an area on the substrate where the touch electrode is not formed, wherein the touch electrode and the floating electrode respectively have slits so that a plurality of microareas are formed in each of the same (first configuration).

With the above-described configuration, since floating electrodes formed of transparent conductive films are formed in an area where touch electrodes are not formed, the touch electrodes formed of transparent conductive films can be made inconspicuous. Further, since both of the touch electrodes and the floating electrodes are divided into microareas, the pattern shape of the touch electrodes can be made more invisible to a user.

In the first configuration described above, preferably, the microareas of the floating electrode are separated from one another, so as to be out of electric contact with one another (second configuration). This makes it possible to effectively prevent floating charges from being charged in the floating electrodes that do not function as an electrode for detecting a touched position, thereby reducing errors in the touched position detection.

In the first and second configurations, preferably, the microareas of the touch electrode and the microareas of the floating electrode have the same shape (third configuration). With this configuration, microarea patterns substantially in the same shape are formed over an entire surface of the touch panel. This makes it possible to more surely prevent the patterns of the touch electrodes from being visible to a user.

In any one of the first to third configurations, preferably, the touch electrode and the floating electrode are formed by patterning a single transparent conductive film formed on the substrate (fourth configuration). This allows the touch electrodes and the floating electrodes to have the same thickness and the same color tone, thereby becoming invisible to a user. Besides, in the case of the above-described configuration, the touch electrodes and the floating electrodes can be formed at the same time. Therefore, the manufacturing process can be simplified.

In any one of the first to fourth configurations, preferably, an interval between the touch electrode and the floating electrode is 100 $\mu$m or less (fifth configuration).

In any one of the first to fifth configurations, preferably, at least a part of a terminal formed on the substrate, a lead line that connects the terminal and the touch electrode with each other, and a connection line that connects the touch electrodes has a lamination structure composed of an aluminum film and a transparent conductive film, and the transparent conductive film is formed so as to cover the aluminum film (sixth configuration). This configuration makes it possible to prevent galvanic corrosion from occurring to the aluminum films. This configuration also prevents the shapes of the aluminum films from becoming clearly visible to a user due to galvanic corrosion having occurred to the aluminum films.

A display device according to one embodiment of the present invention includes: a touch panel according to any one of the first to sixth configurations; and a display panel, wherein, in a state where the touch panel and the display panel are laminated, a display image on the display panel can be viewed through the touch panel (seventh configuration).

By doing so, the characteristic of the above-described touch panel of making the touch electrode patterns invisible to a user can be utilized fully, whereby a display device can be obtained that can prevent deterioration of the image quality of a display image on the display panel.

In the seventh configuration, the substrate of the touch panel preferably doubles as one of a plurality of substrates of the display panel (eighth configuration).

This makes it possible to make thinner the touch-panel-equipped display device that can prevent deterioration of the image quality of a display image on the display panel. Therefore, a compact display device can be realized.

Further, the display panel is preferably a liquid crystal panel (ninth configuration).

[Embodiment]

Hereinafter, an embodiment of the present invention is explained with reference to the drawings.

It should be noted that in the following description of the embodiment explains, as an example of a touch panel, a projection-type electrostatic capacitance touch panel for a liquid crystal display device, in which a front substrate of a liquid crystal panel is used as a substrate for the touch panel.

The following explanation, however, does not limit the configurations and use applications of the touch panel and the touch-panel-equipped display device. A touch panel according to one embodiment of the present invention is not limited to a projection-type electrostatic capacitance touch panel, but the present invention can be applied to various touch panels as long as two-dimensionally patterned transparent conductive films are used as touch electrodes. For example, the present invention can be applied to a two-layer touch panel in which touch electrodes are arrayed in X and Y directions that cross perpendicularly. Further, the configuration of a display device according to one embodiment of the present invention is not limited to a configuration in which a liquid crystal panel is used as a display panel. In the present invention, any of various types of flat display panels such as organic and inorganic electroluminescence (EL) panels, plasma display panels (PDP), and field emission displays can be used as the display panel.

It should be noted that the drawings referred to hereinafter show, in a simplified manner, only principal members needed for explanation of the present invention among constituent members of the embodiment of the present invention, for convenience of explanation. Therefore, a display device according to the present invention may include arbitrary constituent members that are not shown in the drawings that the present specification refers to. Further, the dimensions of the members shown in the drawings do not necessarily faithfully represent actual dimensions of constituent members, dimensional ratios of the members, etc.

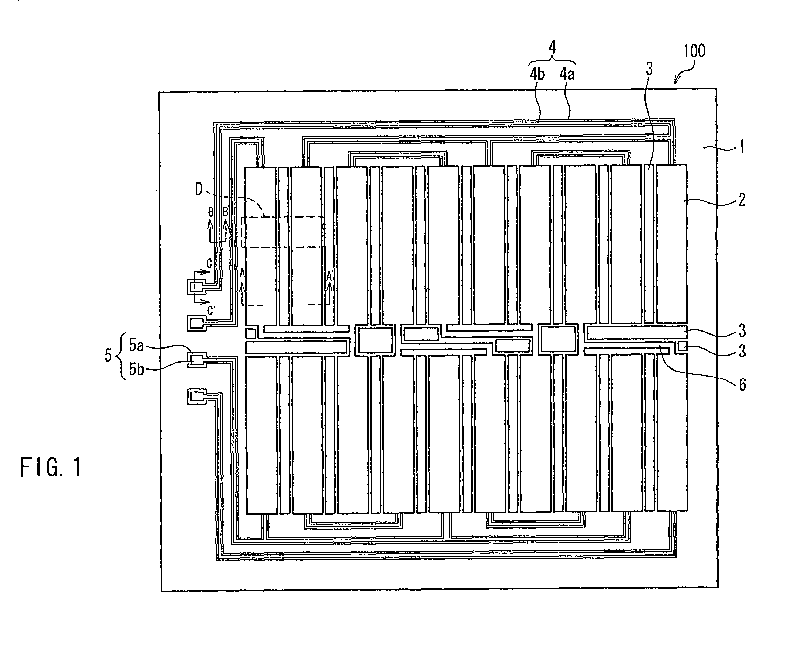

FIG. 1 is a plan view showing a touch panel part of a touch-panel-equipped liquid crystal display device according to one embodiment of the present invention.

The touch-panel-equipped liquid crystal display device of the present embodiment includes a touch panel 100 with which data are input, and a liquid crystal panel 200 for displaying display images, which will be described later.

The touch panel 100 includes touch electrodes 2 that are obtained by forming and patterning transparent conductive films made of ITO on a glass substrate 1 as an insulating substrate. The touch panel 100 of the present embodiment is a projection-type electrostatic capacitance touch panel. Therefore, the touch electrodes 2 are formed with electrode patterns each of which is in the same rectangular shape, as shown in FIG. 1. Thus, a plurality of the touch electrodes 2 are formed on the glass substrate 1. More specifically, in the touch panel 100 of the present embodiment, as shown in FIG. 1, ten of the electrode patterns are arrayed in a line in a horizontal direction, and two of such lines of the electrode patterns are arrayed in a vertical direction. Thus, the touch panel 100 includes twenty of the electrode patterns in total.

It should be noted that the pattern in which the touch electrodes 2 are arrayed is not limited to the example shown in FIG. 1. Therefore, the pattern shape of the touch electrodes 2 may be a shape other than the rectangle shown in FIG. 1, and the number of the patterns arrayed in the horizontal and vertical directions is not limited to twenty in total, i.e., ten patterns in the horizontal direction and two lines in the vertical direction.

In a projection-type electrostatic capacitance touch panel, touch electrodes need to be provided at predetermined intervals, for example, about 200 $\mu$m to 800 $\mu$m, so as to detect a position of a user's finger in contact with the touch panel. Therefore, areas where no touch electrode is formed are present between the touch electrodes.

In the touch panel 100 of the present embodiment, as shown in FIG. 1, floating electrodes 3 formed with transparent conductive films made of ITO, etc., as is the same with the touch electrodes 2, are formed between the touch electrodes 2.

It should be noted that the floating electrodes 3 are provided so that the electrode patterns of the touch electrodes 2 are less visible to a user, as will be described later, and the arrangement and the shape thereof are not limited, unlike the touch electrodes 2. More specifically, in the touch panel 100 of the present embodiment shown in FIG. 1, a rectangular floating electrode 3 having the same long side length as the long side length of the touch electrode 2 is provided between horizontally adjacent ones of the touch electrodes 2 as viewed in FIG. 1. On the other hand, between vertically adjacent ones of the touch electrodes 2, there are provided quadrilateral floating electrodes 3 having various aspect ratios, so as to avoid connection line 6 that connect the touch electrodes 2. These, however, merely show exemplary shape and arrangement of the floating electrodes 3, and do not limit the shape and arrangement of the floating electrodes 3.

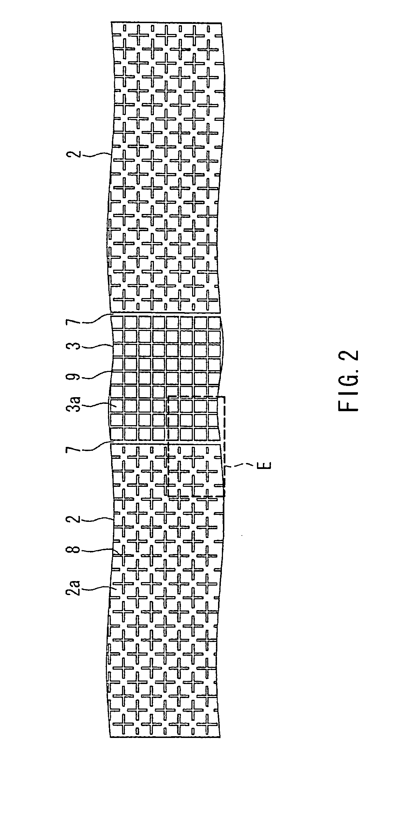

FIG. 2 is an enlarged view of a portion D enclosed by a dotted line in FIG. 1.

As shown in FIG. 2, a plurality of slits 8 each of which is in an approximately cross shape are formed in the touch electrode 2 of the touch panel 100 of the present embodiment, and a slit 9 in a lattice form is formed in the floating electrode 3. This slit 9 of the floating electrode 3 is provided in order to make the slits 8 in the touch electrode 2 inconspicuous.

More specifically, microareas 2a each of which is in an approximately square shape are formed by the approximately cross-shaped slits 8 in the touch electrodes 2. On the other hand, each floating electrode 3 is divided by the lattice-form slit 9 into microareas 3a each of which is in an approximately square shape having the same size as the size of the microarea 2a in the touch electrodes 2. The touch electrodes 2 and the floating electrodes 3 are arranged so that interstices 7 are formed therebetween. It should be noted that the microareas 2a and 3a are formed preferably so that a length of one side is four times the width of the interstice 7, or greater than that. The width of the interstice 7 is preferably 100 μm or less, as will be described later.

As shown in FIG. 2, the microareas 2a in the touch electrode 2 are formed by the independent approximately cross-shaped slits 8. Therefore, adjacent ones of the microareas 2a are continuous with each other via parts thereof, so that the microareas 2 as a whole form the touch electrode 2 having a single potential. In the present embodiment, a change in an electrostatic capacitance of the touch electrode 2 is output via a lead line 4 to a terminal 5 that will be described later. Thus, a touched position can be detected based on an output of the terminal 5, by a detection circuit or the like (not shown).

On the other hand, the microareas 3a of the floating electrode 3 are defined by the continuous, lattice-formed slit 9. Therefore, the microareas 3a are regions that are independent from one another and are out of electric contact with one another. Regarding the floating electrode 3, while its potential does not have to be detected, unlike the touch electrode 2, charges tend to accumulate in the floating electrode 3 itself if it has a large area. Therefore, by making the microareas 3a of the floating electrode 3 out of electric contact with one another as described above, charges accumulating in the floating electrode 3 are prevented from becoming noises to touched position detection signals in the touch electrodes 2. This makes it possible to effectively prevent charges accumulating in the floating electrode 3 from obstructing the accurate detection of a touched position.

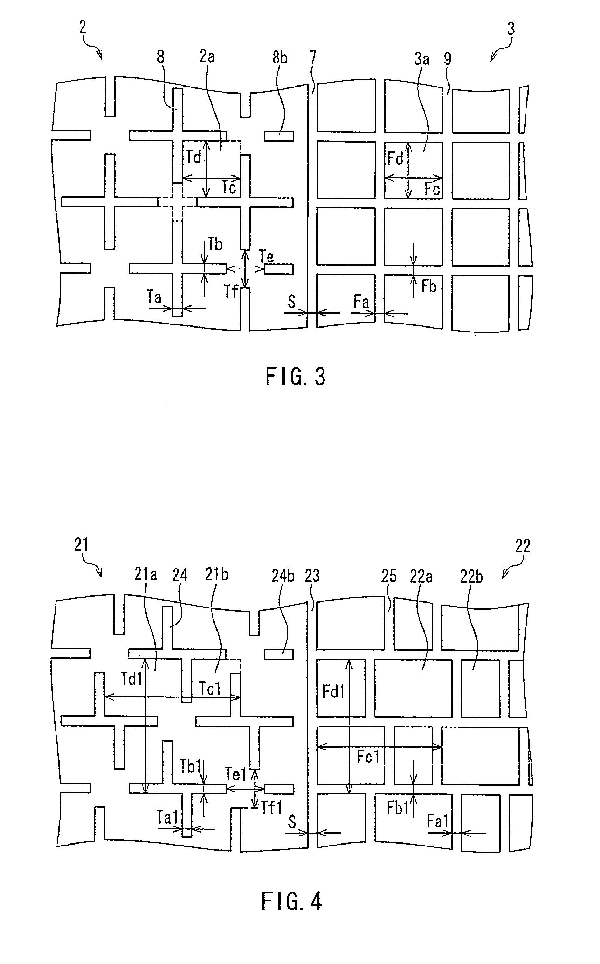

The configuration of the microareas 2a and the slits 8 of the touch electrode 2, and the configuration of the microareas 3a and the slit 9 of the floating electrode 3 are explained in detail with reference to FIG. 3.

FIG. 3 is an enlarged plan view showing the touch panel 100 of the present embodiment, which is further enlarged as compared with FIG. 2. More specifically, FIG. 3 is an enlarged view of the part shown as a region E with a dotted line in FIG. 2.

As shown in FIG. 3, in the touch panel 100 of the present embodiment, both of the microareas 2a of the touch electrode 2 and the microareas 3a of the floating electrode 3 are formed in approximately square shapes. By thus forming the microareas 2a of the touch electrode 2 and the microareas 3a of the floating electrode 3 in the same shape, the transparent conductive films as a whole formed on the surface of the touch panel 100 assume an approximately uniform surface appearance. This makes it possible to more effectively prevent the patterns of the touch electrodes 2 from becoming visible to a user.

Further, as shown in FIG. 3, the touch panel 100 of the present embodiment, lengths Tc and Td of the microarea 2a of the touch electrode 2 are identical to lengths Fc and Fd of the microarea 3a of the floating electrode 3. Besides, lengths Ta and Tb that are widths of the slits 8 formed in the touch electrode 2 are identical to lengths Fa and Fb that are widths of the slit 9 formed in the floating electrode.

In the present embodiment, further, the lengths Ta, Tb, Fa, and Fb are identical to a length S that is a width of the interstice 7 between the touch electrode 2 and the floating electrode 3. This configuration results in that transparent conductive films are formed in the same pattern repetitively throughout the touch electrodes 2 and the floating electrodes 3, as shown in FIG. 3. Therefore, this can effectively prevent the pattern of the touch electrodes 2 from becoming visible to a user. It should be noted that if the width of the interstice 7 is too great, this makes it hard to achieve the effect of the present invention of preventing the pattern of the touch electrodes 2 from becoming visible to a user by forming floating electrodes 3 in areas where the touch electrodes 2 are not formed. From this viewpoint, each width S of the interstices 7 as interstices between the touch electrodes 2 and the floating electrodes 3 is preferably set to 100 μm or less.

In a peripheral portion of the touch electrodes 2, the cross-shaped slits 8 cannot be formed, because sufficient spaces are not available. In this case, no slit may be formed. However, it is not preferable to form no slit, from the viewpoint of making the pattern of the touch electrodes 2 from becoming visible to a user by providing more uniform repetitive patterns over the whole surface of the touch panel. Besides, from the viewpoint of ensuring electric conduction by connecting adjacent ones of the microareas 2a, it is not preferable, either, to provide notches that would be extensions from the slits 9 of the floating electrodes 3, in areas where the cross-shaped slits 8 cannot be formed. Therefore, in the touch panel 100 of the present embodiment, as shown in FIG. 3, slits 8b are provided in the peripheral portions of the touch electrodes 2. The slits 8b have the same width as that of the slit 8, and are arranged so that the intervals of the slit 8b and the slit 8 are identical to the intervals of the slits 8.

It is desirable that intervals Te and Tf between the slits 8 in the touch electrodes 2 should be appropriately decided, depending on the composition and the thickness of the transparent conductive films that form the touch electrodes 2, with the following two viewpoints taken into consideration. One of the two viewpoints is that the microareas 2a of the touch electrode 2 should be formed into the same shape as that of the microareas 3a of the floating electrode 3, and the other viewpoint is that adjacent ones of the microareas 2a in the touch electrode 2 should be connected electrically with each other so that a conductive area necessary for allowing the microareas 2a to function as one touch electrode 2 should be ensured. Generally, the intervals Te and Tf of the slits 8 are preferably about 1/3 to 1/2 of the length Tc or Td as the length of one side of the microarea 2a of the touch electrode 2.

The relationship of respective sizes of the portions of the touch electrode 2 and the floating electrode 3 in the touch panel 100 of the present embodiment can be sorted out as follows:

$$Ta = Tb = Fa = Fb = S$$

$$Tc = Td = Fc = Fd$$

$$Tc/3 < Te < Tc/2$$

$$Td/3 < Tf < Td/2$$

It should be noted that, as exemplary specific dimensions of these, Ta = 10 um, Tc = 90 $\mu$m, and Te = Tf = 30 $\mu$m may be set, in the case where, for example, a touched position detection region part of the touch panel 100 has a diagonal length of 4 inches.

So far the detailed configurations of the touch electrode 2 and the floating electrode 3 have been described, but these are merely examples, and do not limit the configuration of the touch panel. For example, the microarea 2a of the touch electrode 2 and the microarea 3a of the floating electrode 3 are not necessarily square in shape, but may be rectangular, rhombic, triangular, or the like in shape. Further, particularly in the case where the floating electrode 3 has a small area itself, it is not essential to separate the microareas 3a of the floating electrode 3 from one another so as to make them out of electric contact with one another. In this case, the slit formed in the floating electrode 3 so as to divide the floating electrode 3 into the microareas 3a may be replaced with cross-shaped slits as those formed in the touch electrode 2. Further, for the touch panel, it is not essential to form the microareas 2a of the touch electrode 2 and the microareas 3a of the floating electrode in the same shape.

It should be noted that the shapes of the microareas of the touch electrode and the floating electrode may be appropriately selected depending on the materials and the thicknesses of the transparent conductive films used as materials for the touch electrode and the floating electrode. In other words, in the case where visibility to a user is different due to the materials or the thicknesses of the transparent conductive films (for example, in the case where images look excessively grainy), the shape pattern is appropriately selected for the purpose of solving this problem.

Here, another configuration in which the microareas of the touch electrode and the floating electrode are formed in a shape different from the approximately square shape shown in FIGS. 2 and 3 is explained with reference to drawings.

FIG. 4 is an enlarged view of a portion equivalent to the portion shown in FIG. 3, showing another exemplary shape of the microareas of the touch electrode and the floating electrode.

As shown in FIG. 4, the touch electrode 21 and the floating electrode 22 are formed so as to have a pattern in which horizontally-long rectangular microareas 21a and 22a and vertically-long rectangular microareas 21b and 22b are arranged alternately in the horizontal direction.

It should be noted that adjacent ones of the microareas 21a and 21b of the touch electrode 21 are partially continuous so as to be electrically connected. This allows the touch electrode 21 as a whole to be a single electrode. On the other hand, the microareas 22a and 22b of the floating electrode 22 are, as is the same with the configuration shown in FIG. 3, completely separated from one another, and adjacent ones of the microareas of the floating electrode are out of electric contact with one another.

Thus, by providing the microareas shaped as shown in FIG. 4, a microarea pattern in the vertical direction and a microarea pattern in the horizontal direction are different from each other in the touch region of the touch panel 100. Therefore, although images look grainy in the case of the configuration in which the same patterns are repeated in the vertical and horizontal directions (for example, the microarea patterns shown in FIG. 3), the above-described configuration achieves an effect of suppressing such graininess and making the touch electrode pattern less visible to a user.

In order to form the microareas 21a and 21b as shown in FIG. 4, slits 24 each of which has the following shape are formed in the touch electrode 21: its vertical lines above and below its horizontal line are displaced from each other in the horizontal direction. Further, as is the same with the configuration shown in FIG. 3, in a peripheral portion of the touch electrode 21, short slits 24b are formed. Still further, straight-line-shape slits 25, extended respectively in the vertical direction and the horizontal direction, are formed in the floating electrode 22.

It should be noted that exemplary dimensions of the touch electrode 21 in which the microareas 21a and 21b are formed and the floating electrode 22 in which the microareas 22a and 22b are formed are Ta1 = Tb1 = Fa1 = Fb1 = 10 $\mu$m, Tc1 = Td1 = Fc1= Fd1 = 200 $\mu$m, Te1 = 50 $\mu$m, and Tf1 = 30 $\mu$m, in the case where, for example, the touch region has a diagonal length of 4 inches, like the case shown in FIG. 3. It should be noted that the intervals of the touch electrodes 21 and the floating electrodes 22 may be set so as to satisfy S = Ta1 = Tb1 = Fa1 = Fb1 = 10 $\mu$m.

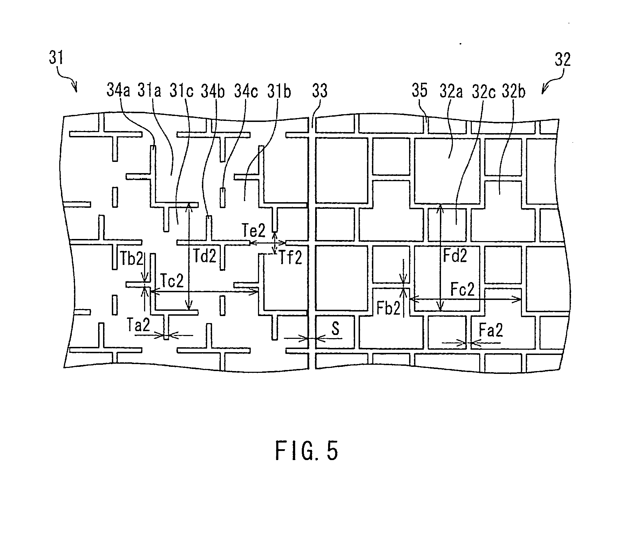

FIG. 5 is an enlarged view of a portion equivalent to the portion shown in FIGS. 3 and 4, showing still another exemplary shape of the microareas of the touch electrode and the floating electrode.

As shown in FIG. 5, the touch electrode 31 and the floating electrode 32 have patterns in which combinations of approximately square, larger microareas 31a, and 32a, approximately square, smaller microareas 31c and 32c, and microareas 31b and 32b are arranged. Each of the microareas 31b and 32b has a shape extended in three directions at angular intervals of about 90°, that is, a shape composed of a rectangle and an outward projection from a center portion of a long side of the rectangle.

It should be noted that in the case of the shape pattern of the microareas shown in FIG. 5 as well, adjacent ones of the microareas 31a, 31b, and 31c of the touch electrode 31 are partially continuous with one another so as to be connected electrically The microareas 32a, 32b, and 32c of the floating electrode 32 are out of electric contact with one another, which is the same as the configurations shown in FIGS. 3 and 4.

In order to form the microareas 31a, 31b, and 31c shown in FIG. 5, two types of slits 34a and 34b that are different in shape are formed in the touch electrode 31, and short slits 34c are formed in a peripheral portion of the touch electrode 31. On the other hand, in the floating electrode 32, a continuous slit 35 is formed so as to form the microareas.

The shape pattern of microareas as shown in FIG. 5 still differs from the pattern in which the same shape appears repeatedly, and therefore, it has a possibility of further reducing the graininess of the touch panel surface due to the shape pattern of microareas.

It should be noted that exemplary dimensions of the touch electrode 31 and the floating electrode 32 are Ta2 = Tb2 = Fa2 = Fb2 = 10 $\mu$m, Tc2 = Td2 = Fc2= Fd2 = 200 $\mu$m, Te2 = 50 $\mu$m, and Tf2 = 30 $\mu$m, in the case where, for example, the touch region has a diagonal length of 4 inches, like the cases shown in FIGS. 3 and 4. It should be noted that S, Ta2, Tb2, Fa2, and Fb2 may be set so as to satisfy S = Ta2 = Tb2 = Fa2 = Fb2 = 10 $\mu$m.

It should be noted that in the cases of the exemplary shape patterns of the microareas shown in FIGS. 4 and 5 also, as is the case with the configuration shown in FIG. 3, if the floating electrode 22 and 32 have small areas in particular, it is not essential to separate the microareas 22a and 22b, or 32a, 32b, and 32c of the floating electrode 22 or 32 so as to make them out of electric contact, respectively. Further, likewise, it is not essential, either, to form the microareas 21a and 21b, or 31a, 31b, and 31c of the touch electrode 21 or 31 and the microareas 22a and 22b, or 32a and 32b of the floating electrode 22 or 32 in the same shape, respectively.

With reference to FIG. 1 again, lead lines 4 are formed in a peripheral area around the touched position detection region in which the touch electrodes 2 are provided. The touch electrodes 2 are connected to the terminals 5 formed at an end portion of the substrate 1 of the touch panel 100, via the lead lines 4. In the touch panel 100 of the present embodiment, four terminal 5 are provided. Further, in the touch panel 100 of the present embodiment, a change in an electrostatic capacitance that occurs when a fingertip or the like approaches the touch electrode 2 is output as a change in a voltage via the four terminals 5, and a touched position is detected by a detection circuit or the like (not shown).

Therefore, each touch electrode 2 is connected to the terminal 5 via the lead lines 4 formed in the peripheral area around the touched position detection region, and connection lines 6 that connect the touch electrodes 2 with one another in the touched position detection region.

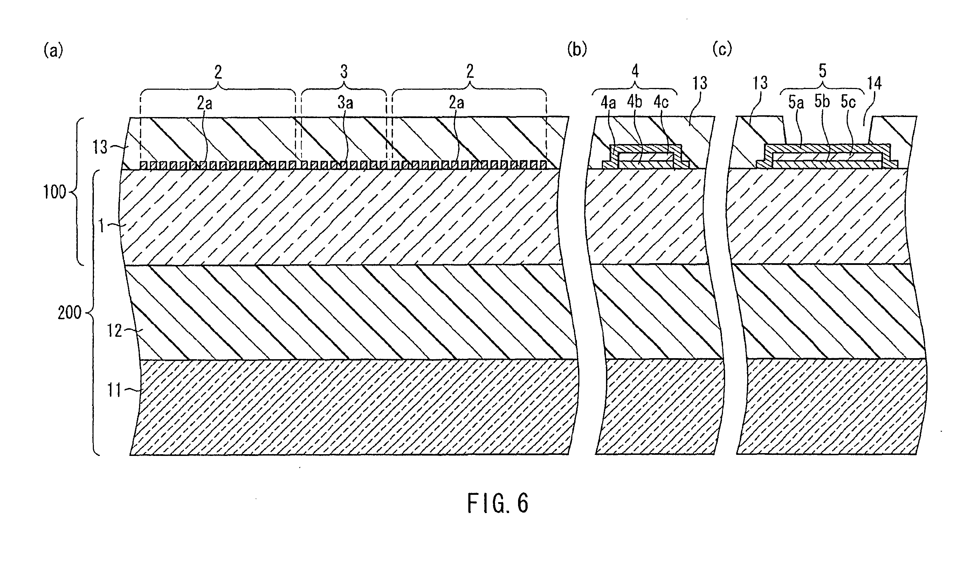

FIG. 6 is a cross-sectional view showing a configuration of a touch-panel-equipped liquid crystal display device according to the present embodiment. (a) of FIG. 6 shows a configuration of a detection region part where the touch electrodes 2 and the floating electrodes 3 are formed (a part viewed along an arrow line A-A' in FIG. 1). (b) of FIG. 6 shows a configuration of the lead line 4 (a part viewed along an arrow line B-B' in FIG. 1). (c) of FIG. 6 shows a configuration of the terminal (a part viewed along an arrow line C-C' in FIG. 1).

As shown in (a), (b), and (c) of FIG. 6, in the touch-panel-equipped liquid crystal display device according to the present embodiment, the touch panel 100 for detecting a position where a touching operation is applied from outside, and the liquid crystal panel 200 as a display panel are laminated. In the touch-panel-equipped liquid crystal display device according to the present embodiment, a front substrate as one substrate that composes the liquid crystal panel 200 doubles as the touch panel 100.

The liquid crystal panel 200 is a usual transmissive liquid crystal panel, and includes a liquid crystal layer 12 between a front substrate 1 and a back substrate 11 that are two glass substrates composing the liquid crystal panel 200.

Though not shown in drawings, color filters are formed for respective pixels on an inner surface of the front substrate 1 (a surface on the liquid crystal layer 12 side) for displaying color images, and a counter electrode for applying a predetermined voltage to the liquid crystal layer 12 is formed thereon, too.

Though not shown in drawings, pixel electrodes arranged in matrix are provided on an inner surface of the back substrate 11 (a surface on the liquid crystal layer 12 side). In the liquid crystal display device, an alignment state of the liquid crystal layer 12 is changed by adjusting a potential between the pixel electrode on the back substrate 11 and the counter electrode on the front substrate 1, so that image display is performed. A region where the pixel electrodes on the back substrate 11 are formed is the display region of the liquid crystal panel 200. The display region of the liquid crystal panel 200 substantially coincide with the touched position detection region of the touch panel 100.

Though not shown in drawings, in the display region of the back substrate 11, there are provided a plurality of gate lines arranged in the row direction of the pixel electrodes, a plurality of source lines arranged in the column direction thereof, and TFTs that are arranged in the vicinities of intersections of the gate lines and source lines and that are connected to the pixel electrodes. By applying a gate voltage to the gate lines sequentially, the TFTs as switching elements are turned on row by row. In this way, a certain row of pixel electrodes, among the pixel electrodes arranged in matrix, can be selected. Then, in this state, voltages necessary for image display are supplied to the pixel electrodes belonging to the selected row, via the source lines, respectively. This is performed with respect to all the rows in the display region, whereby the liquid crystal display device can display images.

Light polarization plates are provided on an upper side of the touch panel 100 and a lower side of the back substrate 11 of the liquid crystal panel 200 as viewed in (a), (b), and (c) of FIG. 6, so that polarization angles thereof are deviated from each other by a predetermined degree. Besides, on inner surfaces of the front substrate 1 and the back substrate 11 of the liquid crystal panel 200, which are surfaces on the liquid crystal layer 12 side, there are provided insulation films that cover the above-described electrodes and switching elements. On surfaces of the insulation films, there are provided alignment films for deciding the direction in which liquid crystal molecules are aligned. However, since these constituent members are merely usual for a liquid crystal panel, the illustration in drawings and detailed explanation of these members are omitted.

Further, a backlight (not shown) is provided on a back side of the liquid crystal panel 200, for projecting illumination light necessary for displaying images with the liquid crystal panel 200. The backlight of the touch-panel-equipped liquid crystal display device 100 according to the present embodiment is of a type referred to as "side light type" or "edge light type", and includes a flat light guide, and a light source provided on a side face of the light guide, such as a cold cathode ray tube, a light emitting diode, or the like. In the backlight having such a configuration, illumination light from the light source, which is incident via the side face of the light guide, is reflected repeatedly inside the light guide, thereby being diffused and propagated. The light, thus becoming homogeneous light, goes out of the light guide from its main surface that faces the liquid crystal panel 200.

It should be noted that the backlight of the liquid crystal display device 200 is not limited to the above-described side-light type. A light of a so-called direct type having the following configuration may be used: a light source is arranged two-dimensionally on a backside of the liquid crystal panel 200 so as to project light toward the liquid crystal panel 200, and the light is projected to the liquid crystal panel via an optical sheet such as a light condensing sheet or a diffusion sheet. The light source is not limited to a cold cathode ray tube or a light emitting diode, but any of various types of light sources, such as a hot cathode ray tube or an EL light emitter, can be used.

Though the present embodiment is described with reference to a so-called active matrix liquid crystal panel as an example regarding the configuration of the liquid crystal panel, the display panel is not limited to this. A so-called simple matrix liquid crystal panel may be used. Further, the method for driving the liquid crystal panel is not limited to a so-called vertical alignment mode of applying a voltage across opposed substrates. Another driving method can be adopted, such as the IPS mode of applying a voltage in a planar direction of the substrates.

Further, the liquid crystal panel 200 is not limited to that having a configuration called "transmissive" or "semi-transmissive" that uses illumination light from a backlight for image display. A so-called reflection-type liquid crystal panel may be used that causes external light incident through the front substrate 1 to be reflected by a reflection electrode formed on the back substrate 11 and uses the light for image display. In the case of this reflection-type liquid crystal panel, the backlight and the polarization plate arranged on an outer side of the back substrate (a lower side as viewed in FIG. 6) are unnecessary.

As shown in (a) of FIG. 6, in the detection region where a position touched by a user is detected, the touch electrodes 2 are formed with transparent conductive films made of ITO or the like, on the substrate 1 that doubles as the front substrate of the liquid crystal panel 200. Besides, between adjacent ones of the touch electrodes 2 on the substrate 1, the floating electrodes 3 are formed, which are made of transparent conductive films made of ITO or the like, as is the same with the touch electrodes 2. In the touch-panel-equipped liquid crystal display device of the present embodiment, all of the touch electrodes 2 and the floating electrodes 3 are divided into the microareas 2a and 3a, respectively. On the substrate 1, a protective film 13 made of SiN, $SiO_2$, or another transparent resin is formed so as to cover the touch electrodes 2 having the microareas 2a and the floating electrodes 3 having the microareas 3a.

Each lead line 4, as shown in (b) of FIG. 6, includes an aluminum electrode 4b formed on the glass substrate 1, a MoNb layer 4c formed on the aluminum electrode 4b, and a transparent conductive film 4a made of ITO or the like that is formed so as to cover the MoNb layer 4c and the aluminum electrode 4b. Further, the protective film 13 made of SiN, SiO$_2$, or another transparent resin is formed so as to cover the transparent conductive film 4a.

Each terminal 5 includes an aluminum layer 5b formed on the glass substrate 1, a MoNb layer 5c formed on the aluminum layer 5b, and a transparent conductive film 5a made of ITO or the like formed so as to cover the MoNb layer 5c and the aluminum layer 5b, as shown in (c) of FIG. 6.

Further, the protective film 13 made of SiN, SiO$_2$, or another transparent resin is formed so as to cover the transparent conductive film 5a. It should be noted that an opening 14 is formed in the insulation film 13 at a center part of the terminal 5. In this opening 14, a connection electrode terminal connected to an external substrate (not shown) having a detection circuit is in contact with the surface of the transparent conductive film 5a, whereby a change in the voltage of the touch electrode 2 output to the terminal 5 is read out.

As described above, in the touch-panel-equipped liquid crystal display device of the present embodiment, the lead line 4 and the terminal 5 have the MoNb layers 4c and 5c formed on the aluminum electrode 4b and the aluminum layer 5b, which are formed in order to obtain electric conduction. Here, if the aluminum layer is in direct contact with the transparent conductive film made of ITO or the like, galvanic corrosion tends to occur. If this galvanic corrosion occurs, electric resistances of the both increase, and besides, corroded portions get colored, and make the lead line pattern and the like visible to a user. In contrast, by forming the MoNb layers between the aluminum layers and the transparent conductive layers as described above, the occurrence of galvanic corrosion can be prevented effectively.

It should be noted that regarding the thicknesses of the members shown in (a), (b), and (c) of FIG. 6, for example, the substrate 1 has a thickness of 0.7 mm, the aluminum layers 4b and 5b have a thickness of 150 nm, the MoNb layers 4c and 5c have a thickness of 100 nm, the transparent conductive films 2, 3, 4a, and 5a have a thickness of 70 nm. The total thickness of the liquid crystal panel 200 is, for example, about 1.4 mm.

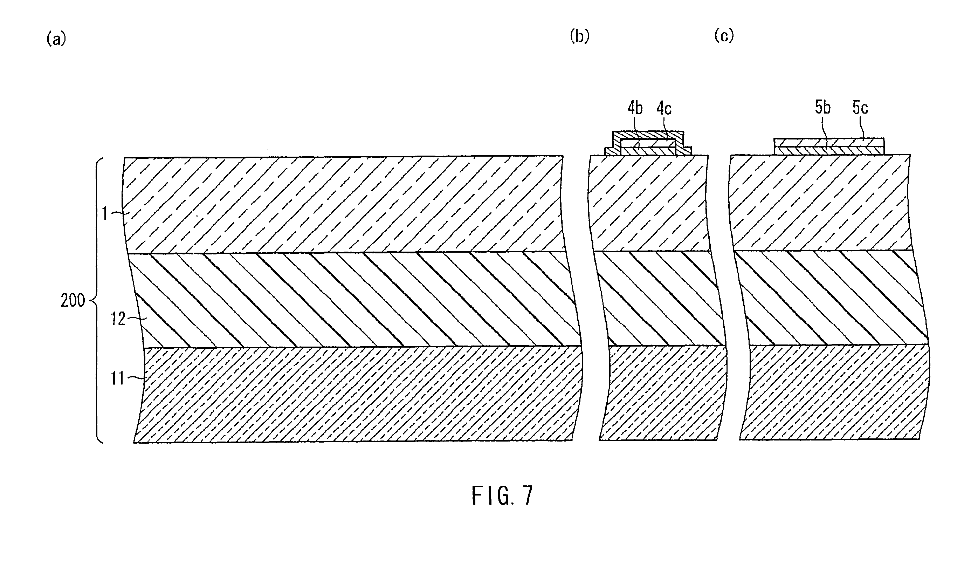

Next, a method for manufacturing the touch-panel-equipped liquid crystal display device according to the present embodiment is explained with reference to FIGS. 7 to 9. In FIGS. 7 to 9, like the cross-sectional view in FIG. 6, each (a) is a cross-sectional view showing a configuration of the touch region where the touch electrodes 2 are formed (a part viewed along an arrow line A-A' in FIG. 1); each (b) is a cross-sectional view showing a configuration of the lead line 4 (a part viewed along an arrow line B-B' in FIG. 1); and each (c) is a cross-sectional view showing a configuration of the terminal 5 (a part viewed along an arrow line C-C' in FIG. 1).

First, a method for manufacturing the liquid crystal panel 200 is explained below.

Color filters and the like are formed at predetermined positions on the front substrate 1, while pixel electrodes, gate lines, source lines, and switching elements are formed on the back substrate 11. Next, films of polyimide as alignment films for aligning liquid crystal are formed in the liquid crystal display region on the front substrate 1 and the back substrate 11. The back substrate 11 is provided with seal, liquid crystal is drop-filled therein, and the front substrate 1 and the back substrate 11 are laminated with each other.

Next, a photosensitive sealing material is applied over external surfaces of the front substrate 1 and the back substrate 11 thus laminated, and ultraviolet rays are projected thereto so that the photosensitive sealing material is cured. Further, either the front substrate 1 or the back substrate 11 thus laminated is subjected to sheet processing with use of a chemical solution such as hydrofluoric acid as required.

Thereafter, a metal layer that will form parts of the lead lines 4 and the terminals 5 is formed on a surface of the front substrate 1 on a side opposite to the side thereof in contact with the liquid crystal layer 12, as shown in (b) and (c) of FIG. 7. In the present embodiment, the metal layer is composed of the aluminum layer 4b, 5b as a first layer and a MoNb layer 4c, 5c as a second layer. Therefore, the aluminum layer and the MoNb layer are formed in this order continuously by sputtering.

Then, after a resist film is applied over the metal layer, a pattern of the resist film (not shown) is caused to remain on areas where the lead lines 4 and the terminals 5 are to be provided. Next, using this resist pattern as a mask, the MoNb layer and the aluminum layer are etched with a liquid of mixture of phosphoric acid, acetic acid, and nitric acid. Thereafter, the resist is removed by a resist removing solution, whereby the state shown in (a), (b), and (c) of FIG. 7 is obtained.

Next, a transparent conductive film made of ITO or the like that will form the touch electrodes 2 is formed by sputtering. Then, resist patterns (not shown) are formed so that the touch electrodes 2 having two-dimensional patterns, the floating electrodes 3 formed between adjacent ones of the touch electrodes 2, the lead lines 4, connection lines (not shown), and the terminals 5 remain. Here, resist patterns for the touch electrodes 2 and the resist patterns for the floating electrodes 3 are formed so that the touch electrodes 2 and the floating electrodes 3 will be divided into the microareas 2a and 3a as shown in FIGS. 2 and 3, respectively. More specifically, the resist patterns for the touch electrodes 2 are formed into a shape that allows the cross-shaped slits 8 to be formed in the touch electrodes 2. On the other hand, the resist patterns for the floating electrodes 3 are formed into a shape that allows the lattice-form slits 9 to be formed in the floating electrodes 3.

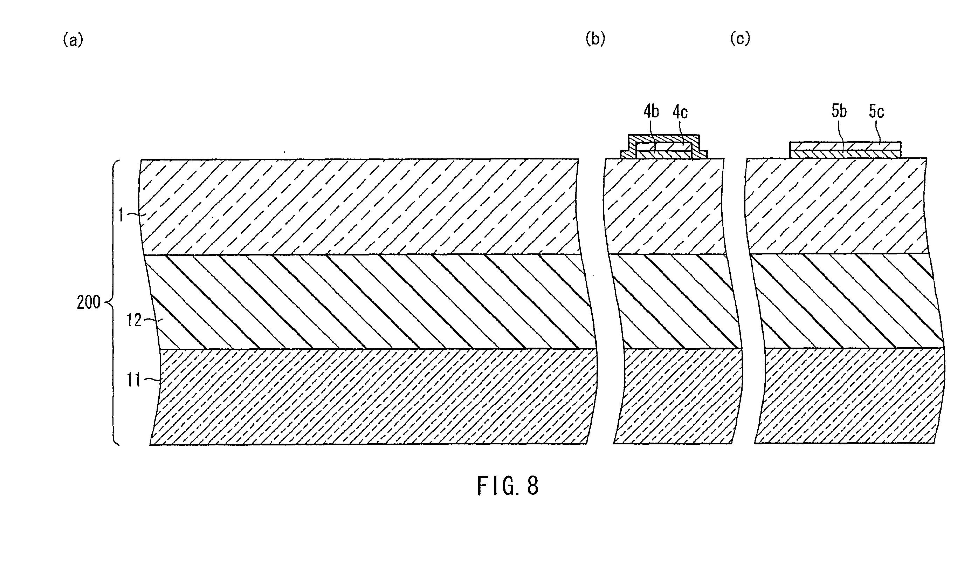

Using the above-described resist patterns as a mask, the transparent conductive films are etched with an oxalic acid solution. Thereafter, the resist patterns are removed by a resist removing solution, whereby the touch region as shown in (a) of FIG. 8, the lead lines 4 as shown in (b) of FIG. 8, and the terminals 5 as shown in (c) of FIG. 8 are formed.

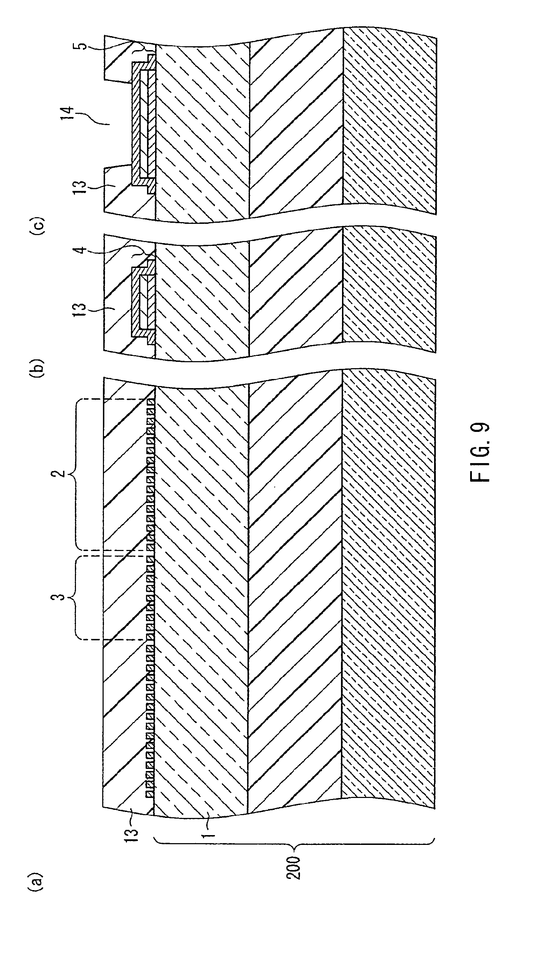

Next, a transparent organic resin is applied over an entire surface of the substrate 1 or the like, whereby the protective film 13 is formed. Then, the openings 14 for providing conduction with a substrate outside or the like are formed by photolithography at positions corresponding to the terminals 5 shown in (c) of FIG. 9.

The lamination of the touch panel 100 and the liquid crystal panel 200 thus obtained is cut, whereby touch-panel-equipped liquid crystal devices are formed.

So far, the configuration and the like of the touch-panel-equipped liquid crystal display device has been explained, as an exemplary application of the touch panel and the liquid crystal display device. However, the exemplary application of the touch panel and the liquid crystal display device is not limited to the touch-panel-equipped liquid crystal display device.

For example, the foregoing embodiment is explained with reference to an exemplary case where the substrate of the touch panel doubles as the front substrate of the liquid crystal panel, as a configuration of the touch-panel-equipped liquid crystal display device, but the configuration is not limited to this. Specifically, the touch panel may have a configuration in which the substrate of the touch panel and the front substrate of the liquid crystal panel are formed with individual members. In this case, the touch panel may be laminated on a usual liquid crystal panel, and bonded thereto with an adhesive or the like.

It should be noted that in the case where the substrate of the touch panel does not double as the substrate of the liquid crystal panel in this way, the substrate of the touch panel may be, for example, a flexible resin substrate, other than the glass substrate described above in the description of the present embodiment.

Industrial Applicability

The present invention is applicable as a touch panel characterized in that a pattern of touch electrodes is less visible to a user, and a display device in which the touch panel and a display panel are laminated.

**Claims**

1. A touch panel comprising:

   a transparent substrate having an insulating property;
   a touch electrode formed of a transparent conductive film formed in a pattern on the substrate; and
   a floating electrode formed of a transparent conductive film, the floating electrode being formed in an area on the substrate where the touch electrode is not formed,
   wherein the touch electrode and the floating electrode respectively have slits so that a plurality of microareas are formed in each of the same.

2. The touch panel according to claim 1, wherein the microareas of the floating electrode are separated from one another, so as to be out of electric contact with one another.

3. The touch panel according to claim 1 or 2, wherein the microareas of the touch electrode and the microareas of the floating electrode have the same shape.

4. The touch panel according to any one of claims 1 to 3, wherein the touch electrode and the floating electrode are formed by patterning a single transparent conductive film formed on the substrate.

5. The touch panel according to any one of claims 1 to 4, wherein an interval between the touch electrode and the floating electrode is 100 $\mu$m or less.

6. The touch panel according to any one of claims 1 to 5, wherein at least a part of a terminal formed on the substrate, a lead line that connects the terminal and the touch electrode with each other, and a connection line that connects the touch electrodes has a lamination structure composed of an aluminum film and a transparent conductive film, and
   the transparent conductive film is formed so as to cover the aluminum film.

7. A display device comprising:

   a touch panel according to any one of claims 1 to 6; and
   a display panel,
   wherein, in a state where the touch panel and the display panel are laminated, a display image on the display panel can be viewed through the touch panel.

8. The display device according to claim 7, wherein the substrate of the touch panel doubles as one of a plurality of substrates of the display panel.

9. The display device according to claim 7 or 8, wherein the display panel is a liquid crystal panel.

FIG. 1

FIG. 2

FIG. 3

FIG. 4

FIG. 5

(a)

(b)          (c)

FIG. 6

EP 2 463 759 A1

(a)                                    (b)            (c)

FIG. 7

EP 2 463 759 A1

EP 2 463 759 A1

(a)

(b)

(c)

4b  4c

5b  5c

200

1

12

11

FIG. 8

(a)                                                          (b)            (c)

FIG. 9

EP 2 463 759 A1

## INTERNATIONAL SEARCH REPORT

International application No.

PCT/JP2010/064295

A. CLASSIFICATION OF SUBJECT MATTER
*G06F3/041*(2006.01)i, *G06F3/044*(2006.01)i, *G06F3/045*(2006.01)i

According to International Patent Classification (IPC) or to both national classification and IPC

B. FIELDS SEARCHED

Minimum documentation searched (classification system followed by classification symbols)
G06F3/041, G06F3/044, G06F3/045

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho    1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 5-224818 A  (Panasonic Corp.),<br>03 September 1993 (03.09.1993),<br>entire text; fig. 1<br>(Family: none) | 1,2,4-9<br>3 |
| Y<br>A | JP 2002-14772 A  (Konica Minolta Holdings, Inc.),<br>18 January 2002 (18.01.2002),<br>entire text; all drawings<br>(Family: none) | 1,2,4-9<br>3 |
| Y | JP 2008-233976 A  (Sharp Corp.),<br>02 October 2008 (02.10.2008),<br>paragraphs [0042], [0060] to [0067]; fig. 2 to 4, 7<br>(Family: none) | 6-9 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    30 November, 2010 (30.11.10) | Date of mailing of the international search report<br>    07 December, 2010 (07.12.10) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2010/064295 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 4-243412 A  (Seiko Epson Corp.),<br>31 August 1992 (31.08.1992),<br>entire text; fig. 1, 2<br>(Family: none) | 8 |
| A | JP 1-17115 A  (Seiko Epson Corp.),<br>20 January 1989 (20.01.1989),<br>entire text; fig. 1 to 5<br>(Family: none) | 1-9 |
| A | JP 2006-344163 A  (NISSHA Printing Co., Ltd.),<br>21 December 2006 (21.12.2006),<br>entire text; all drawings<br>(Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009076432 A